# EUROPÄISCHE PATENTSCHRIFT

(11) **EP 4 437 833 B1**
(45) Veröffentlichungstag und Bekanntmachung des Hinweises auf die Patenterteilung: **09.12.2026**
(21) Anmeldenummer: 24165009.2
(22) Anmeldetag: 21.03.2024
(51) Int. Cl.: A01F 15/07, A01F 15/08

(54) **BALLENPRESSE UND VERFAHREN ZUM BETRIEB EINER BALLENPRESSE**
BALER AND METHOD FOR OPERATING A BALER
PRESSE À BALLES ET PROCÉDÉ DE FONCTIONNEMENT D'UNE PRESSE À BALLES

(30) Priorität: 31.03.2023 DE 102023108278
(43) Veröffentlichungstag der Anmeldung: 02.10.2024
(73) Patentinhaber: Deere & Company, Moline, IL 61265 (US)
(72) Erfinder: Guiet, Lionel, Mannheim (DE); Biziorek, Stephane, Mannheim (DE)
(74) Vertreter: Stein, Stefan

(56) Entgegenhaltungen:
- EP-A1- 4 129 045
- US-A1- 2017 013 783

## Beschreibung

Die Erfindung betrifft eine Ballenpresse gemäss dem Oberbegriff des unabhängigen Anspruchs 1 und ein Verfahren zum Betrieb einer Ballenpresse gemäss dem Oberbegriff des unabhängigen Anspruchs 7.

Ballenpressen, insbesondere Rundballenpressen oder Quaderballenpressen, werden zum Aufnehmen und Pressen von Erntegut, beispielsweise Stroh, Heu oder dergleichen eingesetzt. Die Ballenpresse kann dazu eine Aufnahmeeinheit zum Aufnehmen des Ernteguts umfassen, insbesondere zur Aufnahme des Ernteguts aus einem Schwad. Dabei kann das auf dem Boden liegende Erntegut mit der Aufnahmeeinheit, insbesondere einer Pick-up, aufgenommen werden. Die Ballenpresse kann auch eine Presskammer umfassen. Die Presskammern kann eines oder mehrere Pressmitteln umfassen. Die Presskammer kann das von der Aufnahmeeinheit aufgenommene Erntegut aufnehmen und zu einem Ballen pressen. Die Ballenpresse kann ausserdem eine Fördereinheit umfassen. Das von der Aufnahmeeinheit aufgenommene Erntegut kann mit der Fördereinheit, beispielsweise einem Rotor, in die Presskammer geleitet werden. Die Fördereinheit kann als Teil der Aufnahmeeinheit ausgebildet sein oder der Aufnahmeeinheit nachgeordnet sein, insbesondere in Förderrichtung nachgeordnet sein. In der Presskammer wird der Ballen, insbesondere der Rundballen oder der Quaderballen, geformt. Der fertig geformte Ballen kann im Anschluss in der Presskammer mit einem Wickelmaterial, beispielsweise Netz, Folie oder Bindegarn, umwickelt werden. Der fertig geformte Ballen oder der fertig umwickelte Ballen, kann, indem eine Auswurfeinheit, beispielsweise eine Auswurfklappe oder ein Heckteil oder eine Heckklappe der Ballenpresse, insbesondere indem die mit der Auswurfeinheit versehene Presskammer, in eine geöffnete Position bewegt wird und optional über eine Rampe, oder insbesondere einen Auswerfer, entladen oder ausgeworfen werden.

Nachteil der bekannten Ballenpressen ist, dass die Ballenpresse während des Entladevorgangs angehalten werden muss, insbesondere zunächst der Ballen vollständig entladen und/oder die Auswurfeinheit wieder vollständig geschlossen werden muss, bevor die Ballenpresse weiterbewegt werden kann. Dazu kann beispielsweise die erste Position (geschlossene Position) der Auswurfeinheit mit einem induktiven Sensor oder einem Schalter erfasst werden. Wenn sich die Auswurfeinheit nicht mehr in der ersten Position befindet, kann davon ausgegangen werden, dass der Ballen nicht mehr in der Presskammer ist und wenn die Auswurfeinheit sich wieder in der ersten Position befindet, kann davon ausgegangen werden, dass der Ballen ordnungsgemäß ausgeworfen wurde. Der Nachteil ist, dass wenn nur die erste Position erfasst wird, kann es 1 bis 2 Sekunden dauern, bis der Ballen von der Auswurfeinheit entladen ist und einige Sekunden länger, bis die Auswurfeinheit wieder in die erste Position zurückkehrt ist. Dies führt nachteilhafterweise zu einem Zeitverlust beim Entladen des Ballens.

Eine Ballenpresse ist aus US 2017/013783 A1 bekannt.

Der vorliegenden Erfindung liegt daher die Aufgabe zugrunde eine Ballenpresse und ein Verfahren zum Betrieb einer Ballenpresse vorzuschlagen, durch welche die vorgenannten Probleme überwunden werden. Insbesondere sollen eine Ballenpresse und ein Verfahren zum Betrieb einer Ballenpresse vorgeschlagen werden, die es ermöglichen den Ballen schneller auszuwerfen und/oder die Wartezeit der Ballenpresse oder Kombination bis zum Weiterfahren nach dem Entladen zu verkürzen.

Diese Aufgabe wird durch eine Ballenpresse mit den Merkmalen des Anspruchs 1 und ein Verfahren mit den Merkmalen des Anspruchs 7 gelöst. Die abhängigen Ansprüche beziehen sich auf besonders vorteilhafte Ausführungsformen der Erfindung.

Erfindungsgemäss wird eine Ballenpresse vorgeschlagen. Die Ballenpresse umfasst eine Presskammer, um ein Erntegut aufzunehmen und zu einem Ballen zu pressen, und einen Aufnahmeeinheit zum Aufnehmen des Ernteguts vom Boden und zur Zufuhr des Ernteguts in die Presskammer. Die Ballenpresse umfasst weiter eine Auswurfeinheit, die zwischen einer ersten Position, in der die Presskammer geschlossen ist, und/oder insbesondere die Auswurfeinheit die Presskammer verschliessen kann, und einer zweiten Position bewegbar ist, in der die Presskammer zum Entladen des Ballens geöffnet ist. Im Weiteren umfasst die Ballenpresse eine Steuereinheit und einen Beschleunigungssensor, zur Erfassung einer Beschleunigung, insbesondere vertikalen Beschleunigung, der Ballenpresse in Form eines Beschleunigungssignals. Die Steuereinheit ist mit dem Beschleunigungssensor verbunden. Das Beschleunigungssignal ist vom Beschleunigungssensor an die Steuereinheit sendbar und/oder das Beschleunigungssignal von der oder mit der Steuereinheit empfangbar. Die Auswurfeinheit, insbesondere ein erster Aktuator, wird mit der Steuereinheit derart betrieben, insbesondere ist derart ansteuerbar und/oder einstellbar und/oder verstellbar, dass die Auswurfeinheit in Abhängigkeit vom Beschleunigungssignal bewegt wird. Die Auswurfeinheit kann also insbesondere als eine Funktion der Beschleunigung bewegt werden. Mit anderen Worten, die Auswurfeinheit, insbesondere der Aktuator, ist mit der Steuereinheit derart betreibbar, insbesondere derart ansteuerbar und/oder einstellbar und/oder verstellbar, dass die Auswurfeinheit in Abhängigkeit vom Beschleunigungssignal zwischen der ersten Position und der zweiten Position bewegbar ist, insbesondere von der zweiten Position in die erste Position bewegbar ist.

Die Ballenpresse kann eine Quaderballenpresse zum Bilden von Quaderballen oder eine Rundballenpresse zum Bilden von Rundballen aus Erntegut sein. Die Ballenpresse kann einen Ballenpressenrahmen umfassen. Ebenso kann die Ballenpresse in ein Zugfahrzeug integriert sein, also die Ballenpresse als selbstfahrende Ballenpresse ausgebildet sein. Die Ballenpresse kann durch Räder auf dem Erdboden abgestützt sein. Die Ballenpresse kann ein Ballensystem zum Formen von Ballen, insbesondere in einer Pressphase, umfassen. Die Ballenpresse, insbesondere das Ballensystem, kann die Aufnahmeeinheit, insbesondere eine Pick-up, zum Aufnehmen von Erntegut umfassen, insbesondere zur Aufnahme des Ernteguts aus einem Schwad. Die Ballenpresse, insbesondere das Ballensystem, kann auch die Presskammer umfassen. Die Presskammern kann eines oder mehrere Pressmitteln umfassen. Die Ballenpresse kann ausserdem eine Fördereinheit umfassen. Mit dem Ballensystem, insbesondere mit der Presskammer, kann der Ballen, insbesondere in einer Pressphase, geformt werden. Die Ballenpresse, insbesondere das Ballensystem, kann eine Wickeleinrichtung zum Umwickeln des fertig geformten Ballens mit einem Wickelmaterial, beispielsweise Netz, Folie oder Bindegarn, umfassen. Der fertig geformte Ballen kann, insbesondere in der Presskammer, mit dem Wickelmaterial umwickelt werden. Die Ballenpresse, insbesondere das Ballensystem, kann die Auswurfeinheit, beispielsweise eine Auswurfklappe oder ein Heckteil oder eine Heckklappe der Ballenpresse, umfassen. Der fertig geformte Ballen oder der fertig umwickelte Ballen, kann, wenn die Auswurfeinheit in der zweiten Position ist, also die Presskammer geöffnet ist, entladen oder ausgeworfen werden. Die Auswurfeinheit kann schwenkbar an der Ballenpresse, insbesondere dem Ballenpressenrahmen oder einem Gehäuseteil, angeordnet, bevorzugt mit dieser oder diesem verbunden und/oder an diesem befestigt und/oder getragen sein, besonders bevorzugt schwenkbar gelagert sein. Die Ballenpresse kann mit einer größenveränderlichen Presskammer bzw. als Ballenpresse mit variabler Presskammer ausgebildet sein. Die Ballenpresse mit größenveränderlichen Presskammer kann eines oder mehrere Pressmittel umfassen, wobei das Pressmittel insbesondere als Riemen oder Gurt oder Kettenanordnung oder Band ausgebildet sein kann. Ebenso kann die Ballenpresse auch eine größenunveränderliche Presskammer umfassen. Hierbei kann ein Pressmittel als weine oder mehrere Pressrolle ausgebildet sein, die insbesondere als zueinander parallel verlaufender Pressrollen zum Pressen des Ernteguts angeordnet sind. Die Rotationsachsen der Pressrollen können bei geschlossener Auswurfeinheit auf einem Kreisbogen liegen und wenigstens eine der Pressrollen kann angetrieben sein. Die Anordnung der Pressrollen in der Presskammer kann einer Zylinderform entsprechen, sodass die Pressrollen zylindrisch um den Rundballen angeordnet sind und eine zylindrische Umfangsfläche ausbilden. Die Presskammer kann am Ballenpressenrahmen angeordnet, bevorzugt mit diesem verbunden und/oder an diesem befestigt sein. Die Aufnahmeeinheit zur Aufnahme oder zum Sammeln von Erntegut, das auf einem Feld, also Boden liegt, und/oder zum Befördern des Ernteguts in die Presskammer kann ebenfalls am Ballenpressenrahmen angeordnet, bevorzugt mit diesem verbunden und/oder an diesem befestigt sein.

Die Ballenpresse kann den Aktuator, beispielsweise einen ersten Aktuator umfassen. Der Aktuator kann zum Einstellen und/oder Verstellen der Auswurfeinheit, beispielsweise der Auswurfklappe oder ein Heckteil oder eine Heckklappe der Ballenpresse, ausgebildet und/oder eingerichtet sein. Mit dem Aktuator kann die Auswurfeinheit der Ballenpresse einstellbar und/oder verstellbar sein. Die Steuereinheit kann über eine Ventilanordnung mit dem Aktuator verbunden sein. Der Aktuator kann beispielsweise in Form eines Hydraulikzylinders oder Pneumatikzylinders oder Hebekissens oder Gewindetriebs oder Zahnstangentriebs oder Elektrozylinders ausgebildet sein. Der Aktuator kann einen Endes, beispielsweise mit dem Kolben, mit der Auswurfeinheit, und anderen Endes, beispielsweise mit oder dem Zylinder, an der Ballenpresse, beispielsweise am Ballenpressenrahmen oder Gehäuse, verbunden sein, insbesondere befestigt und/oder angelenkt sein. Ebenso kann der Aktuator auch umgekehrt befestigt oder angelenkt sein. Der Aktuator kann mit der Steuereinheit derart ansteuerbar sein, dass die Auswurfeinheit zwischen einer ersten Position, in der die Presskammer geschlossen ist, insbesondere die Auswurfeinheit die Presskammer verschliesst, und einer zweiten Position bewegbar ist, in der die Presskammer geöffnet ist, insbesondere der Ballen ausgeworfen werden kann. Der Aktuator kann mit der Steuereinheit auch derart ansteuerbar sein, dass die Auswurfeinheit jede Position zwischen der ersten und zweiten Position einnehmen kann.

Der Beschleunigungssensor kann eine Beschleunigung der Ballenpresse in Form des Beschleunigungssignals erfassen, insbesondere messen. Der Beschleunigungssensor kann eine Beschleunigung oder Kraft, bevorzugt eine Veränderung der Geschwindigkeit, besonders bevorzugt eine Geschwindigkeitszunahme oder -abnahme, der Ballenpresse erfassen. Im Speziellen kann der Beschleunigungssensor eine vertikale Beschleunigung der Ballenpresse erfassen.

Der Ballen kann ausgeworfen werden, wenn die Auswurfeinheit in der zweiten Position ist. Das Ansteuern der Auswurfeinheit kann manuell erfolgen. Beispielsweise kann der Bediener der Ballenpresse oder eines Zugfahrzeugs, mit welchem die Ballenpresse gezogen werden kann, per Knopfdruck mit einer Ein- und Ausgabeeinheit ein Auswurfsignal generieren, wenn der Ballen fertig gepresst oder fertig umwickelt ist. Das Auswurfsignal kann an die Steuereinheit gesendet werden und die Steuereinheit den Aktuator in Abhängigkeit vom Auswurfsignal derart ansteuern, dass dieser die Auswurfeinheit von der ersten in die zweite Position bewegt. Ebenso kann die Ballenpresse aber auch automatisch entladen werden bzw. die Auswurfeinheit automatisch geöffnet werden, indem die Steuereinheit das Auswurfsignal generiert, wenn der der Ballen fertig gepresst oder fertig umwickelt ist, und den Aktuator in Abhängigkeit vom Auswurfsignal derart ansteuern, dass die Auswurfeinheit in die zweite Position bewegt wird. Vorteilhafterweise kann dadurch das Öffnen der Auswurfeinheit manuell und/oder automatisch erfolgen.

Das Auswurfsignal kann vom Bediener manuell mit der Ein- und Ausgabeeinheit generiert und an die Steuereinheit gesendet werden oder von der Steuereinheit generiert werden, beispielsweise wenn:
- Bevor die Pressphase abgeschlossen ist, beispielsweise wenige Sekunde davor, oder wenn die Pressphase abgeschlossen ist. Der Abschluss der Pressphase bzw. des Pressvorgangs kann vorliegen, wenn der Ballen fertig geformt ist, also beispielsweise eine gewünschte Grösse (beispielsweise Durchmesser, Radius, Volumen) erreicht hat.
- Während oder bevor eine Wickelphase abgeschlossen ist, beispielsweise wenige Sekunde davor, oder wenn die Wickelphase abgeschlossen ist. Der Abschluss der Wickelphase bzw. des Wickelvorgangs kann vorliegen, wenn der Ballen vollständig mit Wickelmaterial umwickelt ist.

Die Ballenpresse, insbesondere das Ballensystem, kann einen oder mehrere Ballensensoren zur Erfassung einer Grösse des Ballens, beispielsweise ein Volumen oder Durchmesser oder den Radius des Ballens, und/oder eine Spannung der Pressmittel und/oder eine Verteilung des Ernteguts umfassen, insbesondere eine seitliche Verteilung des Ernteguts. Der oder die Ballensensoren können die Grösse des Ballens und/oder eine Spannung der Pressmittel oder eine Verteilung des Ernteguts in Form eines Ballensignals erfassen. Der oder die Ballensensoren können an oder im Ballensystem, insbesondere an oder in der Presskammer und/oder der Aufnahmeeinheit, angeordnet sein. Der oder die Ballensensoren können beispielsweise über eine Breite der Presskammer und/oder der Aufnahmeeinheit verteilt sein, um insbesondere eine gleichmäßige Verteilung des Ernteguts in der Presskammern und somit gleichförmige Ballen zu erhalten. Der oder die Ballensensoren können mit der Steuereinheit verbunden sein. Das Ballensignal kann von dem oder den Ballensensoren an die Steuereinheit gesendet bzw. von der Steuereinheit von dem oder den Ballensensoren empfangen werden. Die Steuereinheit kann das Auswurfsignal generieren, wenn die Steuereinheit das Ballensignal empfängt.

Im Speziellen kann die Steuereinheit das Auswurfsignal in Abhängigkeit vom Ballensignal generieren, kurz bevor die Pressphase abgeschlossen ist, beispielsweise wenige Sekunde davor, oder wenn die Pressphase abgeschlossen ist. Der Abschluss der Pressphase bzw. des Pressvorgangs kann vorliegen, wenn die Grösse des Ballens eine vorgegebene Grösse, also eine Zielgrösse, erreicht hat, also die Grösse des Ballens ≥ Zielgrösse ist. Der Abschluss der Pressphase bzw. des Pressvorgangs kann ebenso vorliegen, wenn die Spannung der Pressmittel eine vorgegebene Zielspannung erreicht hat, also insbesondere die Spannung ≥ Zielspannung ist, und/oder die Verteilung des Ernteguts eine vorgegebene Zielverteilung erreicht hat, und somit der Ballen vorgegebene Grösse erreicht hat.

Die Ballenpresse, insbesondere das Ballensystem, kann einen oder mehrere Wickelsensoren zur Erfassung des Zustands bzw. Status der Umwicklung des Ballens umfassen, beispielsweise einen Ultraschallsensor und/oder eine Kamera, oder der Wickelsensor erfasst die Länge des abgerollten Wickelmaterials. Der oder die Wickelsensoren können den Zustand oder Status der Umwicklung des Ballens in Form eines Wickelsignals erfassen. Der oder die Wickelsensoren können an oder im Ballensystem und/oder an oder in der Presskammer angeordnet sein. Der oder die Wickelsensoren können mit der Steuereinheit verbunden sein. Das Wickelsignal kann von dem oder den Wickelsensoren an die Steuereinheit gesendet bzw. von der Steuereinheit von dem oder den Wickelsensoren empfangen werden. Die Steuereinheit kann das Auswurfsignal generieren, wenn die Steuereinheit das Wickelsignal empfängt. Im Speziellen kann die Steuereinheit das Entladesignal in Abhängigkeit vom Wickelsignal generieren, während der Wickelphase oder kurz bevor die Wickelphase abgeschlossen ist, beispielsweise wenige Sekunde davor, oder wenn die Wickelphase abgeschlossen ist. Der Abschluss der Wickelphase bzw. des Wickelvorgangs kann vorliegen, wenn der Ballen vollständig oder fertig mit Wickelmaterial umwickelt ist.

Die Ballenpresse kann einen oder mehrere Neigungssensoren zur Erfassung der Neigung in Form eines Neigungssignals der Ballenpresse umfassen. Der Neigungssensor kann mit der Steuereinheit verbunden sein. Die Steuereinheit kann das Neigungssignal vom Neigungssensor empfangen und/oder der Neigungssensor sendet das Neigungssignal an die Steuereinheit. Die Steuereinheit kann derart betreibbar sein, dass mit der oder durch die Steuereinheit in Abhängigkeit vom Neigungssignal ein Entladewinkel und/oder eine Entladeposition der Ballenpresse, bestimmbar und/oder ermittelbar ist, also insbesondere berechenbar ist. Unter der Neigung der Ballenpresse kann dabei beispielsweise die Seitenneigung des Erdbodens oder eine Hangneigung verstanden werden. Die Seitenneigung des Erdbodens oder die Hangneigung kann hierbei der Neigungswinkel zwischen einer Hangfläche und der Horizontalen sein. Wird der Entladewinkel und/oder die Entladeposition in Abhängigkeit von der Neigung ermittelt, kann die Neigung ausgeglichen wird, indem die Ballenpresse den Ballen an einem Entladeort ohne Neigung entlädt, sodass der Ballen nicht einen Hang herunterrollt oder wegrollt.

Die Ballenpresse, bevorzugt eine Kombination aus der Ballenpresse und Zugfahrzeug, besonders bevorzugt das Zugfahrzeug, können eine oder mehrere GPS-Einrichtungen zur Bestimmung der Position der Kombination, insbesondere des Zugfahrzeugs und/oder der Ballenpresse, in Form eines Positionssignals umfassen. Die Steuereinheit kann mit der GPS-Einrichtung verbunden sein. Die Steuereinheit kann das Positionssignal von der GPS-Einrichtung empfangen und/oder die GPS-Einrichtung das Positionssignal an die Steuereinheit senden. Die Steuereinheit kann derart betreibbar, dass mit der oder durch Steuereinheit in Abhängigkeit vom Positionssignal ein bzw. der Entladewinkel und/oder eine oder die Entladeposition bestimmbar und/oder ermittelbar ist, also insbesondere berechenbar ist. Die GPS-Einrichtung kann beispielsweise eine GPS-Antenne und einen Speicher umfassen. Im Speicher kann die Position des der Kombination, insbesondere des Zugfahrzeugs und/oder der Ballenpresse gespeichert sein. Ebenso kann eine Position des Schwads oder der Solllinie des Schwads, die beispielsweise aus vorherigen Bearbeitungsvorgängen des Schwads bekannt sein kann, gespeichert sein. Die Entladeposition kann beispielsweise derart ermittelt werden, dass die Entladeposition der Kombination, insbesondere des Zugfahrzeugs und/oder der Ballenpresse, beispielweise nicht an einem Hang oder parallel zum Hang ist, sodass der Ballen nicht den Hang herunterrollt. Die Entladeposition kann aber auch derart ermittelt oder vorgegeben werden, dass die vorgegebene Entladeposition eingehalten wird, insbesondere auch zu einer Solllinie des Schwads eingehalten wird. Vorteilhafterweise kann können dadurch der Entladewinkel und/oder die Entladeposition in Abhängigkeit von der Position der Kombination, insbesondere des Zugfahrzeugs und/oder der Ballenpresse, ermittelt werden und der Ballen sicher und an der vorgegebenen Position entladen werden. Darüber hinaus kann der Ballen derart abgelegt werden, dass dieser in einem nachfolgende Sammelvorgang, also wenn die Ballen vom Feld eingesammelt werden, schnell und mit einem kurzen Sammelweg eingesammelt werden kann. Die Ballenpresse, bevorzugt eine Kombination aus einem Zugfahrzeug und Ballenpresse, besonders bevorzugt das Zugfahrzeug, kann die Ein- und Ausgabeeinheit umfassen. Die Steuereinheit kann mit der Ein- und Ausgabeeinheit verbunden sein. Die Ein- und Ausgabeeinheit kann das Auswurfsignal beispielsweise als Signalton oder visuell auf einem Bildschirm der Ein- und Ausgabeeinheit ausgeben.

Wesentlich für die Erfindung ist, dass die Ballenpresse einen Beschleunigungssensor umfasst, der die Beschleunigung der Ballenpresse erfasst, und die Ansteuerung der Auswurfeinheit in Abhängigkeit vom Beschleunigungssignal erfolgt. Dies ermöglicht der Steuereinheit, die Beschleunigung während des Ablegens des Ballens zu überwachen und die durch den Ballen auf dem Weg von der Presskammer zum Boden erzeugte Beschleunigung zu erkennen. Dadurch kann vorteilhafterweise die Information darüber, ob der Ballen ausgeworfen ist, genauer und/oder schneller und/oder auf einfachere Art und Weise gewonnen werden. Von Vorteil ist darüber hinaus, dass die Information über das Auswerfen auf eine zuverlässigere Art und Weise gewonnen wird. Auch kann der Zeitpunkt, wann die Auswurfeinheit zu schliessen ist, also insbesondere in die erste Position gefahren werden kann, genauer und/oder schneller bestimmt werden, sodass die Zeit zum Entladen erheblich reduziert werden kann. Ebenso kann vorteilhafterweise das Schliessen der Auswurfeinheit schneller erfolgen.

In Ausgestaltung der Erfindung umfasst die Ballenpresse eine Rampe oder einen Auswerfer, um den Ballen auf den Boden abzulegen. Die Rampe oder der Auswerfer können also derart ausgestaltet sein, dass der Ballen mit der Rampe oder dem Auswerfer auf den Boden ablegbar ist. Der Beschleunigungssensor ist derart ausgestaltet, und insbesondere mit der Steuereinheit derart ansteuerbar, dass der Beschleunigungssensor ein erstes Beschleunigungssignal erzeugt, insbesondere erfasst und erzeugt, wenn der Ballen, insbesondere der fertig gepresste oder fertig umwickelte Ballen, aus der Presskammer ausgeworfen wird und/oder auf der Rampe oder den Auswerfer landet oder auf diese auftrifft bzw. auf die Rampe oder den Auswerfer entladen wird, und/oder ein zweites Beschleunigungssignal erzeugt, insbesondere erfasst und erzeugt, wenn der Ballen von der Rampe oder dem Auswerfer auf den Boden entladen wird. Der Beschleunigungssensor kann das erste und/oder zweite Beschleunigungssignal an die Steuereinheit senden und/oder die Steuereinheit kann das erste und /oder zweite Beschleunigungssignal vom Beschleunigungssensor empfangen. Der Beschleunigungssensor kann also unter anderem die folgenden Beschleunigungen erfassen oder detektieren:
- Der Beschleunigungssensor kann eine erste Beschleunigung in Form des ersten Beschleunigungssignals erfassen oder detektieren, wenn der Ballen aus der Presskammer ausgeworfen wird und auf die Rampe oder den Auswerfer auftrifft. Dabei kann die erste Beschleunigung der Ballenpresse entstehen, insbesondere eine vertikale Beschleunigung der Ballenpresse. Der auf der Rampe oder den Auswerfer landende Ballen kann die Ballenpresse, und somit insbesondere die Rampe oder den Auswerfer, beschleunigen, bevorzugt in eine erste Richtung, besonders bevorzugt in Richtung Boden bzw. Untergrund.
- Der Beschleunigungssensor kann eine zweite Beschleunigung in Form des zweiten Beschleunigungssignals erfassen oder detektieren, wenn der Ballen von der Rampe oder dem Auswerfer auf den Boden bzw. das Feld entladen wird. Dabei kann eine zweite Beschleunigung der Ballenpresse entstehen, insbesondere eine vertikale Beschleunigung der Ballenpresse. Der von der Rampe entladene Ballen kann die Ballenpresse beschleunigen, bevorzugt entgegengesetzt zur ersten Richtung, besonders bevorzugt weg vom Boden bzw. Untergrund.

Vorteilhafterweise kann dadurch der Zeitpunkt des Entladens des Ballens genauer erfasst werden.

In Ausgestaltung der Erfindung ist Auswurfeinheit, insbesondere der Aktuator, mit der Steuereinheit derart betreibbar, insbesondere derart ansteuerbar und/oder einstellbar und/oder verstellbar, dass die Auswurfeinheit in Abhängigkeit vom ersten und/oder zweiten Beschleunigungssignal bewegt wird. Im Speziellen ist die Auswurfeinheit, insbesondere der Aktuator, mit der Steuereinheit derart betreibbar, insbesondere derart ansteuerbar und/oder einstellbar und/oder verstellbar, dass die Auswurfeinheit von der zweiten in die erste Position bewegt wird, wenn die Steuereinheit das erste und das zweite Beschleunigungssignal empfängt oder empfangen hat. Mit anderen Worten, die Auswurfeinheit kann in die erste Position bewegt und somit die Presskammer geschlossen werden, wenn die Steuereinheit beide Beschleunigungssignale empfängt. Vorteilhafterweise kann, wenn die Steuereinheit beide Beschleunigungssignale empfangen hat, die Ballenpresse sich wieder bewegen bzw. fahren, da sichergestellt ist, dass der Ballen von der Rampe entladen ist.

In Ausgestaltung der Erfindung umfasst die Ballenpresse einen Zeitgeber, oder insbesondere Zeitmesser. Die Steuereinheit ist mit dem Zeitgeber verbunden. Die Steuereinheit ist betreibbar, mit dem Zeitgeber eine Zeiterfassung für ein vorgegebenes Zeitintervall durchzuführen, oder insbesondere ein vorgebbares Zeitintervall oder einen Zeitraum zu erfassen. Die Zeiterfassung beginnt, wenn die Steuereinheit das erste Beschleunigungssignal empfängt. Die Auswurfeinheit, insbesondere der Aktuator, ist mit der Steuereinheit derart ansteuerbar, dass die Auswurfeinheit, insbesondere der Aktuator, in Abhängigkeit vom vorgegebenen Zeitintervall bewegt wird, insbesondere vom ersten Beschleunigungssignal und dem vorgegebenen Zeitintervall bewegt wird. Mit anderen Worten, der Zeitgeber ist mit der Steuereinheit derart betreibbar, insbesondere derart ansteuerbar und/oder einstellbar und/oder verstellbar, dass eine Zeiterfassung für ein vorgegebenes Zeitintervall durchführbar ist. Der Zeitgeber kann als Teil der Steuereinheit ausgebildet sein. Die Steuereinheit kann mit dem Zeitgeber das Zeitintervall erfassen, wobei das Zeitintervall mit dem Empfang des ersten Beschleunigungssignals oder als Reaktion auf den Empfang des ersten Beschleunigungssignals beginnen kann. Mit anderen Worten, der Zeitgeber zählt die Zeit, die seit Auswurf des Ballens aus der Presskammer und/oder Auftreffen des Ballens auf der Rampe verstrichen ist, und leitet dieses Zeitintervall an die Steuereinheit weiter, die dieses Zeitintervall mit einem Sicherheitszeitintervall vergleicht, bevor das Schließen der Auswurfeinheit beginnt. Dieses Merkmal erhöht die Sicherheit des Systems weiter, um zu vermeiden, dass sich der Ballen im Schließweg der Auswurfeinheit befindet. Die Zeiterfassung kann aber auch beginnen, wenn die Steuereinheit das erste und zweite Beschleunigungssignal empfängt bzw. empfangen hat. Dann kann die Auswurfeinheit, insbesondere der Aktuator, mit der Steuereinheit derart ansteuerbar sein, dass die Auswurfeinheit, insbesondere der Aktuator, in Abhängigkeit vom ersten und zweiten Beschleunigungssignal und dem vorgegebenen Zeitintervall bewegt wird.

Der Zeitgeber kann aber auch zusätzlich oder als einzige Bedingungen mit der Steuereinheit derart ansteuerbar sein, insbesondere einstellbar sein, dass das Zeitintervall zwischen dem Zeitpunkt des Empfangs des ersten Beschleunigungssignals und/oder zweiten Beschleunigungssignal erfasst wird. Die Steuereinheit kann derart betreibbar sein, dass diese das erfasste Zeitintervall mit einem minimalen (vorbestimmten) Zeitintervall vergleicht. Vorzugsweise kann die Steuereinheit derart betreibbar sein, dass die Steuereinheit, wenn das erfasste Zeitintervall größer als das minimale Zeitintervall ist, dies als eine weitere Bedingung verwendet, um zu verifizieren, dass der Ballen freigegeben wurde. Diese Ausführung kann verwendet werden, um eine falsche Einschätzung der Ballenfreigabe als Reaktion auf (kleine) Schwingungen der Rampe zu vermeiden. Die Schwingungen können beispielsweise durch einen unregelmäßigen oder geneigten Boden, auf dem die Ballenpresse steht, verursacht werden. Im Speziellen ist die Auswurfeinheit, insbesondere der Aktuator, mit der Steuereinheit derart ansteuerbar, dass die Auswurfeinheit von der zweiten in die erste Position bewegt wird, wenn die durch das Zeitintervall vorgegebene Zeit abgelaufen ist, insbesondere die Steuereinheit das erste Beschleunigungssignal empfängt und die durch das Zeitintervall vorgegebene Zeit abgelaufen ist. Dadurch kann vorteilhafterweise auf dem Empfang des zweiten Beschleunigungssignals verzichtet werden. Im Weiteren weist diese alternative Ausführung die oben genannte Vorteile auf.

Die Erfindung betrifft weiter ein Verfahren zum Betrieb bzw. Betreiben einer Ballenpresse nach mindestens einem der Ansprüche 1 bis 6. Die Ballenpresse umfasst:
- eine Aufnahmeeinheit, mit dem das Erntegut vom Boden aufgenommen und einer Presskammer zugeführt wird, und
- die Presskammer, mit der das Erntegut zu einem Ballen gepresst wird, eine Auswurfeinheit, die zwischen einer ersten Position, in der die Presskammer geschlossen ist, und einer zweiten Position bewegt wird, in der die Presskammer zum Entladen des Ballens geöffnet ist, und
- eine Rampe, mit der der Ballen abgelegt wird, und
- einen Beschleunigungssensor, mit dem eine (vertikale) Beschleunigung der Ballenpresse in Form eines Beschleunigungssignals erfasst wird.

Die Auswurfeinheit, insbesondere der Aktuator, wird in Abhängigkeit vom Beschleunigungssignal bewegt. Die Ballenpresse umfasst eine Steuereinheit.

Der Beschleunigungssensor ist mit der Steuereinheit verbunden. Der Beschleunigungssensor kann das Beschleunigungssignal an die Steuereinheit senden. Die Auswurfeinheit, insbesondere der Aktuator, wird mit der Steuereinheit in Abhängigkeit vom Beschleunigungssignal angesteuert und/oder bewegt.

Das Verfahren weist alle Vorteile der oben genannten erfindungsgemässen Kombination auf. In Ausgestaltung der Erfindung erfasst und/oder erzeugt oder generiert der Beschleunigungssensor ein erstes Beschleunigungssignal, wenn der Ballen aus der Presskammer ausgeworfen wird und/oder auf die Rampe oder den Auswerfer auftrifft bzw. landet, und/oder ein zweites Beschleunigungssignal, wenn der Ballen von der Rampe auf den Boden oder das Feld entladen wird. Im Speziellen wird die Auswurfeinheit, insbesondere der Aktuator, in Abhängigkeit vom ersten und zweiten Beschleunigungssignal bewegt. Ebenso kann die Auswurfeinheit, insbesondere der Aktuator, mit der Steuereinheit in Abhängigkeit vom ersten und das zweiten Beschleunigungssignal bewegt werden. Im Speziellen wird die Auswurfeinheit, insbesondere der Aktuator, von der zweiten in die erste Position bewegt, wenn das erste und zweite Beschleunigungssignal erzeugt wird, insbesondere die Steuereinheit das erste und das zweite Beschleunigungssignal empfängt. In Ausgestaltung der Erfindung wird eine Zeiterfassung für ein vorgegebenes Zeitintervall durchgeführt, wobei die Zeiterfassung beginnt, wenn das erste Beschleunigungssignal erzeugt wird, insbesondere die Steuereinheit das erste Beschleunigungssignal empfängt, und die Auswurfeinheit in Abhängigkeit vom vorgegebenen Zeitintervall bewegt wird. Die Ballenpresse kann einen Zeitgeber umfassen. Der Zeitgeber kann mit der Steuereinheit verbunden sein. Die Steuereinheit kann derart betrieben werden bzw. der Zeitgeber mit der Steuereinheit derart angesteuert werden, dass mit dem Zeitgeber eine Zeiterfassung für ein vorgegebenes Zeitintervall durchgeführt wird. Die Auswurfeinheit kann mit der Steuereinheit derart angesteuert werden, dass die Auswurfeinheit in Abhängigkeit vom vorgegebenen Zeitintervall bewegt wird. Im Speziellen wird die Auswurfeinheit von der zweiten in die erste Position bewegt, wenn die durch das Zeitintervall vorgegebene Zeit abgelaufen ist. Dazu kann die Auswurfeinheit mit der Steuereinheit derart angesteuert werden, dass die Auswurfeinheit, von der zweiten in die erste Position bewegt wird, wenn die durch das Zeitintervall vorgegebene Zeit abgelaufen ist. Die Erfindung kann auch eine Kombination aus einem Zugfahrzeug und einer erfindungsgemässen Ballenpresse nach mindestens einem der Ansprüche 1 bis 6 umfassen.

Der oder die Aktuatoren und/oder der Neigungssensor und/oder die GPS-Einrichtung und/oder die Ein- und Ausgabeeinheit und/oder der Beschleunigungssensor und/oder der Zeitgeber und/oder alle weiteren Sensoren, beispielsweise der oder die Ballensensoren, Wickelsensoren und/oder ein Auswurfklappensensor können mit der Steuereinheit betreibbar, bevorzugt ansteuerbar und/oder steuerbar und/oder regelbar, besonders bevorzugt einstellbar und/oder verstellbar sein. Die Steuereinheit kann der Ballenpresse zugeordnet sein. Im Speziellen kann, wenn die Ballenpresse Teil einer Kombination aus einem Zugfahrzeug, beispielsweise ein Traktor oder Schlepper ist, die Steuereinheit dem Zugfahrzeug oder beiden gemeinsam zugeordnet und/oder an oder in diesen angeordnet sein. Die Kombination, insbesondere das Zugfahrzeug oder die Ballenpresse oder beide gemeinsam, kann bzw. können die Steuereinheit umfassen. Ebenso kann die Steuereinheit als Zugfahrzeugsteuereinheit und/oder Ballenpressensteuereinheit ausgebildet sein. Die Steuereinheit kann als ein elektronisches Modul, ein eingebettetes System, eine Recheneinheit, ein Computer, als ein Modul zum Steuern und/oder Regeln der Ballenpresse, bevorzugt der Kombination, also des Zugfahrzeugs und/oder der Ballenpresse, ausgebildet sein. Die Steuereinheit kann einen Prozessor, einen Speicher und/oder alle Software, Hardware, Algorithmen, Anschlüsse, insbesondere auch Sensoren, umfassen, die für die Steuerung und/oder Regelung der Ballenpresse, insbesondere der Kombination erforderlich sind. Das Verfahren kann als Programm oder Algorithmus ausgebildet sein, welches auf und/oder mit der Steuereinheit ausführbar ist. Die Steuereinheit kann jedes Gerät umfassen, das Daten von verschiedenen Sensoren analysieren, Daten vergleichen und die erforderlichen Entscheidungen treffen kann, um den Betrieb der Kombination und die erforderlichen Aufgaben zur Steuerung und/oder Regelung des Betriebs der Kombination zu steuern und/oder zu regeln und/oder auszuführen. Die Steuereinheit kann mit den Bauteilen der Kombination, also insbesondere dem Aktuator und/oder dem oder den weiteren Aktuatoren und/oder dem Neigungssensor und/oder der GPS-Einrichtung und/oder der Ein- und Ausgabeeinheit und/oder allen weiteren Sensoren, beispielsweise der oder die Ballensensoren, Wickelsensoren und/oder der Auswurfklappensensor verbunden sein, bevorzugt signalverbunden und/oder signalübertragend und/oder datenleitend verbunden sein. Unter einer signalverbundenen und/oder signalübertragenden und/oder datenleitenden Verbindung kann dabei unter anderem verstanden werden, dass ein Austausch von Signalen und/oder Daten zwischen den verbundenen Bauteilen stattfindet. Signale und/oder Daten können beispielsweise von der Steuereinheit empfangen und versendet werden und/oder verarbeitet und/oder bearbeitet werden. Die Verbindung zwischen der Steuereinheit und den Bauteilen der Ballenpresse, insbesondere der Kombination, kann kabelgebunden, insbesondere also mit Kabel, und/oder kabellos, also per Funk, beispielsweise mit Bluetooth oder WLAN realisiert sein. Der Kommunikationsbus kann beispielsweise Isobus, CAN-Bus oder ähnliches sein kann. Ausserdem kann mit der Steuereinheit eine weitere Steuereinheit steuerbar und/oder regelbar und/oder ansteuerbar sein. Die weitere Steuereinheit kann wie die Steuereinheit ausgebildet sein. Die Steuereinheit kann dem Zugfahrzeug zugeordnet, insbesondere am Zugfahrzeug angeordnet sein. Die Steuereinheit kann auch zweiteilig beispielsweise als Teil des Zugfahrzeugs und als Teil der Ballenpresse ausgebildet sein. Die Steuereinheit kann unmittelbar mit der in einer Kabine des Zugfahrzeugs angeordneten Ein- und Ausgabeeinheit Verbindung stehen, durch welche von einer Bedienperson eingegebene Daten an die Steuereinheit übertragen oder von dieser empfangen und ausgegeben werden können. Denkbar ist aber auch, dass die Steuereinheit mittelbar durch eine übergeordnete Steuereinheit mit der Ein- und Ausgabeeinheit verbunden ist. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung einer erfindungsgemässen Ballenpresse, und
- Fig. 2: eine schematische Darstellung einer Kombination aus Zugfahrzeug und erfindungsgemässer Ballenpresse, und
- Fig. 3-5: schematische Darstellungen einer erfindungsgemässen Ballenpresse in verschiedenen Entladephasen, und
- Fig. 6: ein schematisches Flussdiagramm des Verfahrens, nach dem die Steuereinheit des Geräts arbeitet.

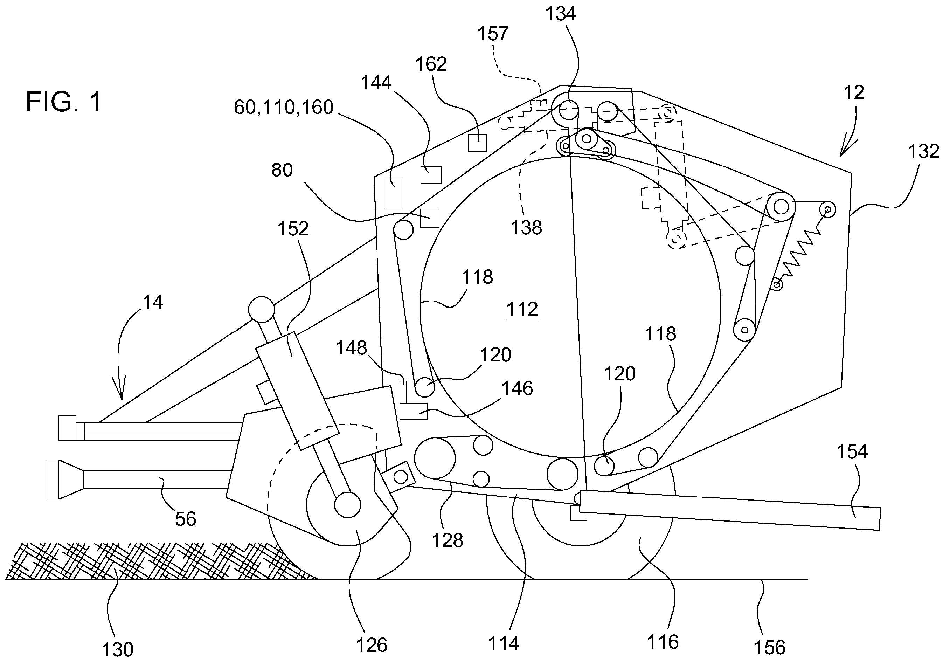

Figur 1 zeigt eine schematische Darstellung eines ersten Ausführungsbeispiels einer erfindungsgemässen Ballenpresse 12. Die Ballenpresse 12 umfasst eine Aufnahmeeinheit 126 zur Aufnahme von Erntegut und eine Presskammer 112, um das aufgenommene Erntegut zu einem Ballen 200 zu formen bzw. zu pressen. Im Speziellen kann die Ballenpresse 12 eine Steuereinheit 60 umfassen, die insbesondere auch als eine Ballenpressensteuereinheit 110 ausgebildet sein kann. Die Ballenpresse 12 kann einen Ballenpressenrahmen 114 umfassen. Der Ballenpressenrahmen 114 kann auf Rädern 116 getragen sein. Die Presskammer 112 kann am oder auf dem Ballenpressenrahmen 114 angeordnet, bevorzugt mit diesem verbunden und/oder an diesem befestigt und/oder getragen sein.

Die Ballenpresse 12 ist mit einer größenveränderlichen Presskammer 112 bzw. als Ballenpresse 12 mit variabler Presskammer 112 ausgebildet. Das Pressmittel 118 ist als Band oder Riemen ausgebildet. Das Pressmittel 118 umgibt die Presskammer 112 und ist mit Rollen 120 geführt. Die Ballenpresse 12 kann aber auch eine größenunveränderliche Presskammer umfassen. Hierbei kann das Pressmittel 118 als eine oder mehrere Pressrollen ausgebildet sein, insbesondere eine Vielzahl zueinander parallel verlaufender Pressrollen zum Pressen des Ernteguts.

Die Aufnahmeeinheit 126, insbesondere in Form einer Pick-up, ist an der Ballenpresse 12 angeordnet und/oder mit dieser verbunden, insbesondere unterhalb der Vorderkante der Ballenpresse 12. Die Aufnahmeeinheit 126 kann sich um eine Querachse bewegenden oder drehenden Zinken umfassen. Der Aufnahmeeinheit 126 kann in einer Erntegutflussrichtung eine Fördereinheit, vorliegend ein Förderband 128, der Ballenpresse 12 folgen. Das Förderband 128 könnte auch durch einen Rotor (nicht gezeigt) ersetzt werden, oder ein Rotor könnte in Gutflussrichtung zwischen der Aufnahmeeinheit 126 und dem Förderband 128 eingefügt werden. Anstelle der Aufnahmeeinheit 126, insbesondere der Pick-up, könnten auch andere geeignete Erntegutaufnahmemittel wie Mäh- und Fördereinheiten verwendet werden.

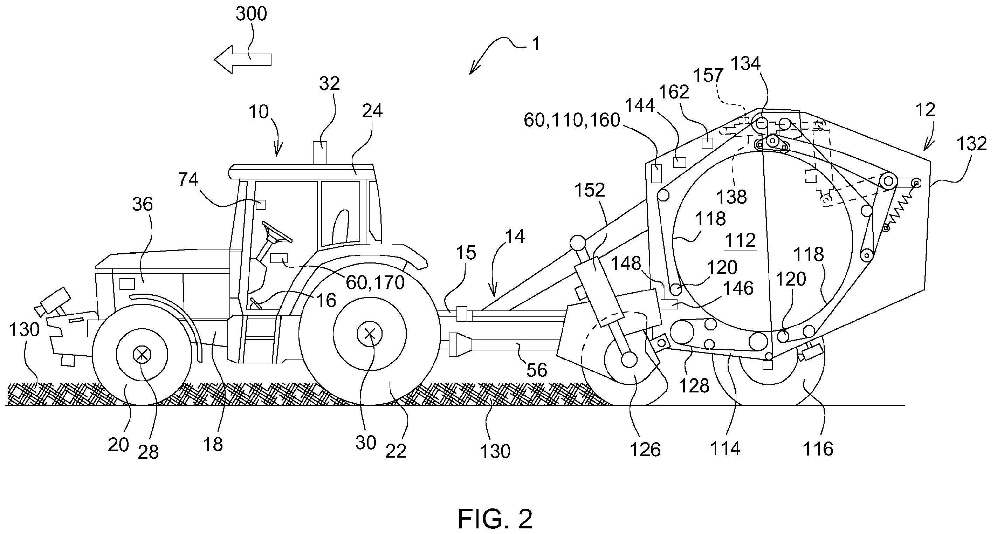

Die Aufnahmeeinheit 126 sammelt Erntegut, das insbesondere in einer Schwade 130 beispielsweise aus Gras, Heu oder Stroh, auf dem Feld liegt, und führt es der Presskammer 112 zu. Die Pressmittel 118, insbesondere eines oder mehrere Bänder oder Gurte, können während eines Ballenpressvorgangs in ihrer Längsrichtung in Bewegung versetzt werden, indem eine oder mehrere der Rollen 120 rotierend angetrieben werden. Das in die Presskammer 112 eingeführte Erntegut dreht sich somit auch während des Pressens. Während des Pressenvorgangs nimmt die Größe der Presskammer 112 mit der Zeit zu. Die Ballenpresse 12 umfasst eine Auswurfeinheit 132, beispielsweise eine Auswurfklappe oder ein Heckteil oder eine Heckklappe der Ballenpresse. Die Auswurfeinheit 132 ist schwenkbar an der Ballenpresse 12, insbesondere dem Ballenpressenrahmen 114 oder einem Gehäuseteil, gelagert. Die Auswurfeinheit 132 ist um eine Achse 134 schwenkbar, die sich quer zur Vorwärtsrichtung eines Zugfahrzeugs 10 (siehe Figur 2) und/oder der Ballenpresse 12 erstreckt. Die Auswurfeinheit 132 ist zwischen einer ersten Position, in der die Presskammer 112 geschlossen ist, und einer zweiten Position bewegbar, in der die Presskammer 112 zum Entladen des Ballens geöffnet ist. Ausserdem umfasst die Ballenpresse 12 eine Rampe 154, um den Ballen 200 auf den Boden 156 abzulegen.

Die Steuereinheit 60 ist mit einem Aktuator 138 verbunden. Der Aktuator 138 kann beispielsweise in Form eines Pneumatikzylinders oder Hebekissens oder Gewindetriebs oder Zahnstangentriebs oder Elektrozylinders ausgebildet sein. Der Aktuator 138 ist vorliegend als Hydraulikzylinder ausgebildet. Die Steuereinheit 60 kann insbesondere über eine Ventilanordnung 80, insbesondere eine erste Ventilanordnung, mit dem Aktuator 138 verbunden sein. Die Auswurfeinheit 132 ist mit dem Aktuator 138 zwischen der ersten Position, in der die Presskammer 112 geschlossen ist, und der zweiten Position bewegbar, in der die Presskammer 112 zum Entladen des Ballens geöffnet ist. Der Aktuator 138 in Form eines Hydraulikzylinders ist mit einem Ende mit der Ballenpresse 12, beispielsweise mit dem Ballenpressenrahmen 114 bzw. dem Gehäuse, und mit einem zweiten Ende mit der Auswurfeinheit 132 verbunden, insbesondere schwenkbar befestigt. Die Auswurfeinheit 132 kann aber auch schwenkbar angelenkt, also an einem Angelpunkt schwenkbar befestigt sein. Der Aktuator 138 kann mit der Auswurfeinheit 132 derart verbunden sein, dass er die Auswurfeinheit 132 um die Achse 134 nach oben (in Fig. 1 gegen den Uhrzeigersinn) schwenken kann, sodass der Ballen 200 aus der Presskammer 112 auswerfbar ist. Die Auswurfeinheit 132 kann also mit dem Aktuator 138 geöffnet oder geschlossen bzw. angehoben und abgesenkt werden. Der Aktuator 138 kann mit der Steuereinheit 60 oder der Ballenpressensteuereinheit 110 mit oder über die Ventilanordnung 80, beispielsweise über eine elektromagnetische oder eine hydraulische Ventilanordnung, eingestellt und/oder verstellt, insbesondere gesteuert und geregelt werden. Die Ventilanordnung 80 kann dabei mit der Steuereinheit 60 oder der Ballenpressensteuereinheit 110 eingestellt und/oder verstellt, insbesondere gesteuert und geregelt werden. Ein Auswurfklappensensor 157 kann beispielsweise die Position des Aktuators 138 oder der Auswurfeinheit 132 erfassen.

Darüber hinaus umfasst die Ballenpresse 12 einen Beschleunigungssensor 162 zur Erfassung einer Beschleunigung der Ballenpresse 12 in Form eines Beschleunigungssignals. Die Steuereinheit 60 ist mit dem Beschleunigungssensor 162 verbunden ist. Das vom Beschleunigungssensor 162 erfasste Beschleunigungssignal ist vom Beschleunigungssensor 162 an die Steuereinheit 60 sendbar und/oder kann von der Steuereinheit 60 empfangen werden. Die Auswurfeinheit 132 ist mit der Steuereinheit 60 derart betreibbar, insbesondere derart ansteuerbar und/oder verstellbar und/oder einstellbar, dass die Auswurfeinheit 132 in Abhängigkeit vom Beschleunigungssignal bewegt wird. Der Beschleunigungssensor 162 ist derart ausgestaltet, dass der Beschleunigungssensor 162 ein erstes Beschleunigungssignal erzeugt und an die Steuereinheit 60 sendet, wenn der Ballen 200 aus der Presskammer 112 ausgeworfen wird und/oder auf der Rampe 154 auftrifft bzw. landet, und/oder ein zweites Beschleunigungssignal erzeugt wird, wenn der Ballen 200 von der Rampe 154 auf den Boden 156 bzw. das Feld entladen wird bzw. die Rampe 154 verlassen hat oder verlässt. Die Auswurfeinheit 132, insbesondere der Aktuator 138, kann mit der Steuereinheit 60 derart betreibbar, insbesondere einstellbar und/oder verstellbar und/oder ansteuerbar sein, dass die Auswurfeinheit 132 in Abhängigkeit, insbesondere der Aktuator 138, vom ersten und zweiten Beschleunigungssignal bewegt wird. Im Speziellen kann die Auswurfeinheit 132, insbesondere der Aktuator 138, mit der Steuereinheit 60 derart betreibbar sein, dass die Auswurfeinheit 132, insbesondere der Aktuator 138, von der zweiten in die erste Position bewegt wird, wenn die Steuereinheit 60 das erste und das zweite Beschleunigungssignal empfängt.

Ebenso kann die Ballenpresse 12 aber auch einen Zeitgeber 160 umfassen. Die Steuereinheit 60 kann mit dem Zeitgeber 160 verbunden sein oder der Zeitgeber 160 in die Steuereinheit integriert sein. Die Steuereinheit 60 kann betreibbar sein, insbesondere einstellbar und/oder verstellbar und/oder ansteuerbar sein, mit dem Zeitgeber 160 eine Zeiterfassung für ein vorgegebenes Zeitintervall durchzuführen, wobei die Zeiterfassung beginnt, wenn die Steuereinheit 60 das erste Beschleunigungssignal empfängt. Die Auswurfeinheit 132 kann dabei mit der Steuereinheit 60 derart ansteuerbar ist, dass die Auswurfeinheit 132 in Abhängigkeit vom vorgegebenen Zeitintervall, und insbesondere dem ersten Beschleunigungssignal bewegt wird. Im Speziellen kann die Auswurfeinheit 132 mit der Steuereinheit 60 derart ansteuerbar sein, dass die Auswurfeinheit 132 von der zweiten in die erste Position bewegt wird, wenn die durch das Zeitintervall vorgegebene Zeit abgelaufen ist. Ausserdem kann mittels oder mit der Steuereinheit 60 ein Bestätigungssignal generierbar sein, wenn die Auswurfeinheit 132 geöffnet, also in der zweiten Position ist. Das Bestätigungssignal kann von der Steuereinheit 60 an eine Ein- und Ausgabeeinheit 74 sendbar und mit der Ein- und Ausgabeeinheit 74, beispielsweise als Signalton oder in Form von Sprache, ausgebbar sein. Ebenso kann mittels oder mit der Ein- und Ausgabeeinheit 74, ein Auswurfsignal generierbar und an die Steuereinheit 60 sendbar sein. Die Steuereinheit 60 kann dann in Abhängigkeit vom Auswurfsignal die Auswurfeinheit 132 derart ansteuern, dass die Auswurfeinheit 132 in die zweite Position bewegt wird. Wesentlich für die erfindungsgemässe Ballenpresse ist, dass die Auswurfeinheit 132, insbesondere der Aktuator 138, mit der Steuereinheit 60 derart ansteuerbar ist, dass die Auswurfeinheit 132 in Abhängigkeit vom Beschleunigungssignal bewegbar ist.

Die Ballenpresse 12 kann einen Ballensensor 144 umfassen, um die Grösse eines Ballens in der Presskammer 112 zu erfassen bzw. mit dem eine Grösse eines Ballens erfasst wird. Die Steuereinheit 60 oder die Ballenpressensteuereinheit 110 kann mit dem Ballensensor 144 verbunden, bevorzugt signalverbunden und/oder signalübertragend und/oder datenleitend verbunden sein. Die Steuereinheit 60 oder die Ballenpressensteuereinheit 110 kann mit dem Ballensensor 144 beispielsweise mittels eines Kabels, insbesondere mit einem lösbaren Stecker, oder über eine Funkverbindung verbunden sein. Der Ballensensor 144 kann an oder in der Presskammer 112 angeordnet sein, insbesondere in dieser befestigt. Der Ballensensor 144 kann beispielsweise den Abstand zur Ballenoberfläche bzw. zu dem an der Ballenoberfläche anliegendem Pressmittel 118 erfassen und so Auskunft über die Grösse des Ballens geben, insbesondere den Radius und/oder den Ballendurchmesser. Die von den Ballensensor 144 erfasste Grösse des Ballens oder die Ballenform kann dem Bediener auf der Ein- und Ausgabeeinheit 74 angezeigt werden.

Die Ballenpresse kann eine Wickeleinrichtung 146 umfassen. Die Wickeleinrichtung 146 kann an, insbesondere in der Nähe, der Presskammer 112 angeordnet sein. Die Wickeleinrichtung 146 kann mit der Steuereinheit 60 oder der Ballenpressensteuereinheit 110 verbunden sein und, sobald diese von der Steuereinheit 60 oder der Ballenpressensteuereinheit 110 dazu angewiesen wird, ein Wickelmaterial wie Garn, Band, Netz oder Verpackungsbogen an die Presskammer 112 abgeben. Der rotierende Ballen 200 kann an dem Wickelmaterial ziehen oder dieses einfangen, so dass es dann um den Ballen 200 gewickelt wird. Ein Wickelsensor 148 kann mit der Wickeleinrichtung 146 interagieren und erfassen, ob beispielsweise der Ballen 200 an der Verpackung zieht oder der Wickelvorgang abgeschlossen ist.

Die Aufnahmeeinheit 126 kann beispielsweise mit einem weiteren oder dritten Aktuator 152, hier in Form eines Hydraulikzylinders, angehoben und abgesenkt werden. Der weitere Aktuator 152 kann mit der Steuereinheit 60 oder der Ballenpressensteuereinheit 110, beispielsweise über die Ventilanordnung 80 oder eine weitere oder dritte Ventilanordnung (nicht dargestellt), eingestellt und/oder verstellt, insbesondere gesteuert und geregelt werden. Die weitere Ventilanordnung kann beispielsweise eine hydraulische oder elektromagnetische Ventilanordnung sein. Die weitere Ventilanordnung kann mit der Steuereinheit 60 oder der Ballenpressensteuereinheit 110 eingestellt und/oder verstellt, insbesondere gesteuert und geregelt werden.

Figur 2 zeigt eine schematische Darstellung des ersten Ausführungsbeispiels der erfindungsgemässen Ballenpresse 12 in einer Kombination 1 aus einem Zugfahrzeug 10 und der Ballenpresse 12. Die in Figur 2 gezeigte Ballenpresse 12 entspricht im Wesentlichen der in Figur 1 gezeigten Ballenpresse 12, sodass im Folgenden lediglich auf Details und/oder Unterschiede eingegangen wird. Die Kombination 1 besteht aus einem Zugfahrzeug 10 und der mittels einer Deichsel 14 vom Zugfahrzeug 10 gezogenen Ballenpresse 12. Das Zugfahrzeug 10 umfasst einen Antriebsmotor 36, welcher mit einer Antriebswelle 56 der Ballenpresse 12 verbunden sein kann. Der Antriebsmotor 36 kann als Verbrennungskraftmaschine oder als Elektromotor ausgeführt sein.

Die Kombination 1 bzw. das Zugfahrzeug 10 umfasst die Ein- und Ausgabeeinheit 74. Die Steuereinheit 60 kann auch im Zugfahrzeug 10 angeordnet sein. Ebenso kann die Steuereinheit 60 aber auch als Zugfahrzeugsteuereinheit 170 und Ballenpressensteuereinheit 110 ausgebildet sein, wobei die Ballenpresse die Ballenpressensteuereinheit 110 und das Zugfahrzeug 10 die Zugfahrzeugsteuereinheit 170 umfassen kann. Die Ballenpressensteuereinheit 110 und die Zugfahrzeugsteuereinheit 170 können jeweils einzeln als Steuereinheit 60 ausgebildet sein oder zusammen die den Aufbau und alle Funktionalitäten und alle Verbindungen der Steuereinheit 60 aufweisen. Die Steuereinheit 60 ist mit der Ein- und Ausgabeeinheit 74 verbunden, insbesondere signalverbunden. Mit der in einer Kabine 24 des Zugfahrzeugs angeordneten Ein- und Ausgabeeinheit 74 können von einem Bediener der Kombination 1 in die Ein- und Ausgabeeinheit 74 eingegebene Daten oder Befehle an die Steuereinheit 60 übertragen oder von dieser empfangen werden. Die Daten und Befehle können mit der Ein- und Ausgabeeinheit 74 und ausgegeben werden.

Das Zugfahrzeug 10 kann einen Zugfahrzeugrahmen 18 umfassen, insbesondere auf dem Zugfahrzeugrahmen 18 getragen sein. Der Zugfahrzeugrahmen 18 kann auf Bodeneingriffsmittel getragen sein. Die Bodeneingriffsmittel, hier in Form von Vorderrädern 20 und Hinterrädern 22 dargestellt, stehen mit einem Untergrund zur Übertragung von Antriebskräften in Eingriff und/oder das Zugfahrzeug 10 stützt sich mit diesen auf dem Untergrund ab. Die Bodeneingriffsmittel, insbesondere die Vorderräder 20 und Hinterräder 22 können lenkbar und/oder beweglich sein. Die Kabine 24 kann vom Zugfahrzeugrahmen 18 getragen sein. Ausserdem kann sich in der Kabine 24 eine Arbeitsstation des Bedieners und/oder die Ein- und Ausgabeeinheit 74 befinden. Das Zugfahrzeug 10 umfasst eine Vorderachse 28 und eine Hinterachse 30. Die Hinterachse 30 kann permanent und die Vorderachse 28 kann überhaupt nicht oder bedarfsweise zuschaltbar oder permanent angetrieben werden. Die Vorderachse 28, und/oder insbesondere die Hinterachse 30 können lenkbar sein. Das Zugfahrzeugs 10 kann beispielsweise auch ein Gaspedal 16 oder einen nicht gezeigten Handgashebel umfassen. Im Folgenden beziehen sich Richtungsangaben wie vorne und hinten, links und rechts auf die Vorwärtsrichtung 300 des Zugfahrzeugs 10, die in Fig. 1 nach links geht.

Die Ballenpresse 12 ist mit dem Zugfahrzeug 10 verbunden, und/oder insbesondere gekoppelt. Das Zugfahrzeug 10 ist durch die Deichsel 14 mit der Ballenpresse 12 verbunden. Beispielsweise kann die Ballenpresse 12 mit der Deichsel 14 an eine Anhängerkupplung 15 (engl. Hitch) des Zugfahrzeugs 10 gekoppelt sein. Das Zugfahrzeug 10 kann die Ballenpresse 12 ziehen.

Die Kombination 1, insbesondere das Zugfahrzeug 10, kann auch eine GPS-Einrichtung 32 zur Bestimmung der Position der Kombination 1 in Form eines Positionssignals umfassen. Die Steuereinheit 60 ist mit der GPS-Einrichtung 32 verbunden. Die Steuereinheit 60 empfängt das Positionssignal von der GPS-Einrichtung 32. Die Steuereinheit 60 ist derart betreibbar, dass mit der Steuereinheit 60 in Abhängigkeit vom Positionssignal ein Entladewinkel und/oder eine Entladeposition bestimmbar und/oder ermittelbar ist. Mit der GPS-Einrichtung 32 könne also Positionsdaten versendbar und/oder empfangbar sein, und/oder insbesondere berechenbar sein. Die GPS-Einrichtung 32 kann beispielsweise eine Positionsdaten empfangende GPS-Antenne und einen Speicher umfassen. Im Speicher kann die Position des Schwads 130 gespeichert sein, die aus früheren Arbeitsgängen bekannt ist. Das Zugfahrzeug 10 kann dann so gelenkt werden, dass die tatsächliche Position der Kombination 1 oder des Zugfahrzeugs 10, die von der GPS-Antenne bereitgestellt werden, und die Position des Schwads 130 aus dem Speicher übereinstimmen.

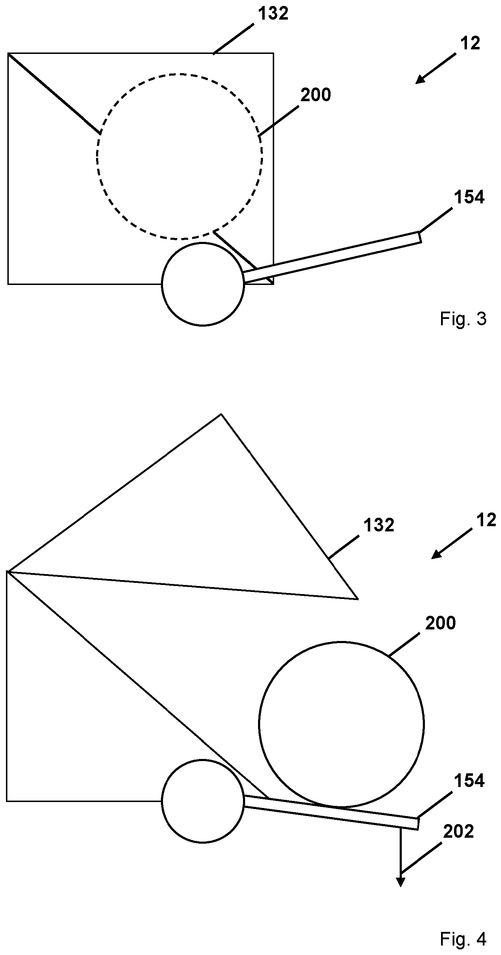

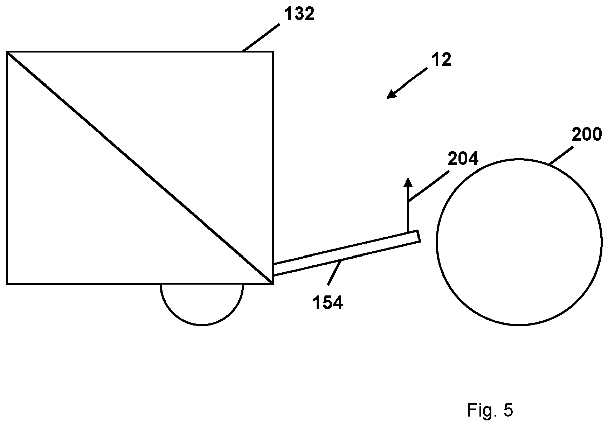

Figuren 3 bis 5 zeigen schematische Darstellungen einer erfindungsgemässen Ballenpresse 12 in verschiedenen Entladephasen. Die in den Figuren 3 bis 5 gezeigte Ballenpresse 12 entspricht im Wesentlichen der in den Figuren 1 und 2 gezeigten Ballenpresse 12, sodass im Folgenden lediglich auf Details und/oder Unterschiede eingegangen wird. Die Ballenpresse 12 umfasst die Presskammer 112, um das Erntegut aufzunehmen und zu einem Ballen 200 zu pressen und eine Auswurfeinheit 132, die zwischen einer ersten Position (siehe Figuren 3 und 5), in der die Presskammer 112 geschlossen ist, und einer zweiten Position (siehe Figur 4) bewegbar ist, in der die Presskammer 112 zum Entladen des Ballens geöffnet ist sowie eine Rampe 154 oder einen Auswerfer, um den Ballen 200 auf den Boden abzulegen. Die Auswurfeinheit 132 ist mit der Steuereinheit derart ansteuerbar, dass die Auswurfeinheit 132 in Abhängigkeit vom Beschleunigungssignal bewegt wird, insbesondere von der zweiten in die erste Position.

In Figur 3 ist der Ballen 200 noch in der Presskammer 112. Figur 4 zeigt den Ballen 200, wenn er aus der Presskammer 112 entladen und auf der Rampe 154 aufgetroffen ist. Aufgrund der Entlastung der Ballenpresse 12, um das Gewicht des Ballens 200, beim Fallen aus der Presskammer 112 und/oder der vom Ballen 200 auf die Ballenpresse übertragene Kraft bzw. Beschleunigung beim Auftreffen oder Landen auf der Rampe oder dem Auswerfer, das erste Beschleunigungssignal erzeugt und/oder erfasst. Das erste Ballensignal wird an die Steuereinheit 60 gesendet. Figur 5 zeigt den Ballen 200, wenn er von der Rampe 154 auf den Boden 156 entladen wird. Der Ballens 200 entlastet die Rampe 154, insbesondere um die Gewichtskraft 204, die als Beschleunigung in Form des zweiten Beschleunigungssignal erfasst wird. Das zweite Beschleunigungssignal wird also erzeugt, wenn der Ballen 200 von der Rampe 154 auf den Boden 156 entladen wird. Die Auswurfeinheit 132 ist mit der Steuereinheit 60 derart betreibbar, dass die Auswurfeinheit 132 in Abhängigkeit vom ersten und zweiten Beschleunigungssignal bewegt wird, insbesondere von der zweiten Position in die erste Position, wenn die Steuereinheit das erste und das zweite Beschleunigungssignal empfängt.

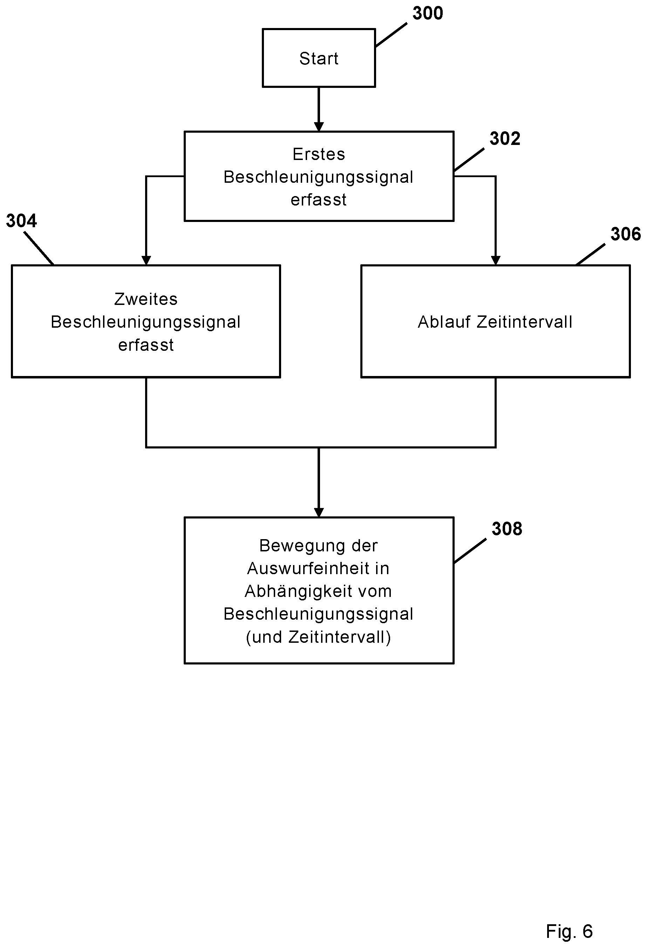

Figur 6 zeigt ein schematisches Flussdiagramm des erfindungsgemässen Verfahrens, nach insbesondere die Steuereinheit 60 arbeitet und den Ablauf des Verfahrens. Die in Figur 6 gezeigte Arbeitsweise ist mit den in den Figuren 1 bis 5 gezeigten Ballenpresse 12 durchführbar. Nach dem Start im Schritt 300 folgt der Schritt 302, in dem der Beschleunigungssensor 162 ein erstes Beschleunigungssignal erzeugt, wenn der Ballen aus der Presskammer ausgeworfen wird und auf die Rampe entladen wird. In Schritten 304 und 306 wird ein zweites Beschleunigungssignal erzeugt, wenn der Ballen auf den Boden entladen wird und/oder eine Zeiterfassung für ein vorgegebenes Zeitintervall durchgeführt, wobei die Zeiterfassung beginnt, wenn das erste Beschleunigungssignal erzeugt wird, insbesondere die Steuereinheit 60 das erste Beschleunigungssignal empfängt, und die Auswurfeinheit 132, insbesondere mit der Steuereinheit 60 derart ansteuerbar ist, dass die Auswurfeinheit 132 in Abhängigkeit vom vorgegebenen Zeitintervall bewegt wird. Im Schritt 308 wird die Auswurfeinheit 132 in Abhängigkeit vom ersten und das zweiten Beschleunigungssignal bewegt. Im Speziellen wird die Auswurfeinheit 132 von der zweiten in die erste Position bewegt, wenn das erste und zweite Beschleunigungssignal erzeugt wird, insbesondere die Steuereinheit 60 das erste und das zweite Beschleunigungssignal empfängt. Alternativ wird die Auswurfeinheit 132, insbesondere mit der Steuereinheit 60 derart angesteuert, dass die Auswurfeinheit 132 von der zweiten in die erste Position bewegt wird, wenn die durch das Zeitintervall vorgegebene Zeit abgelaufen ist. Ebenso kann die Auswurfeinheit 132 von der zweiten in die erste Position bewegt werden, wenn die durch das Zeitintervall vorgegebene Zeit abgelaufen ist und das erste und zweite Beschleunigungssignal erzeugt wird, insbesondere die Steuereinheit 60 das erste und zweite Beschleunigungssignal empfängt.

## Patentansprüche

1. Ballenpresse, umfassend:
eine Presskammer (112), um ein Erntegut aufzunehmen und zu einem Ballen (200) zu pressen, eine Aufnahmeeinheit (126) zum Aufnehmen des Ernteguts vom Boden (156) und zur Zufuhr des Ernteguts in die Presskammer (112),
eine Auswurfeinheit (132), die zwischen einer ersten Position, in der die Presskammer (112) geschlossen ist, und einer zweiten Position bewegbar ist, in der die Presskammer (112) zum Entladen des Ballens geöffnet ist, eine Steuereinheit (60), einen Beschleunigungssensor (162), zur Erfassung einer Beschleunigung der Ballenpresse (12) in Form eines Beschleunigungssignals,
wobei die Steuereinheit (60) mit dem Beschleunigungssensor (162) verbunden ist, und das Beschleunigungssignal vom Beschleunigungssensor (162) an die Steuereinheit (60) sendbar ist,
**dadurch gekennzeichnet, dass** die Steuereinheit (60) eingerichtet ist, die Auswurfeinheit (132) in Abhängigkeit vom Beschleunigungssignal zu bewegen.

2. Ballenpresse nach Anspruch 1, **dadurch gekennzeichnet, dass** die Ballenpresse (12) eine Rampe (154) oder einen Auswerfer umfasst, um den Ballen (200) auf den Boden (156) abzulegen, und/oder der Beschleunigungssensor (162) ein erstes Beschleunigungssignal erzeugt, wenn der Ballen (200) aus der Presskammer (112) ausgeworfen wird und/oder auf der Rampe (154) oder dem Auswerfer auftrifft, und/oder ein zweites Beschleunigungssignal erzeugt wird, wenn der Ballen (200) von der Rampe (154) auf den Boden (156) entladen wird.

3. Ballenpresse nach Anspruch 2, **dadurch gekennzeichnet, dass** die Auswurfeinheit (132) mit der Steuereinheit (60) derart betreibbar ist, dass die Auswurfeinheit (132) in Abhängigkeit vom ersten und/oder zweiten Beschleunigungssignal bewegt wird.

4. Ballenpresse nach Anspruch 3, **dadurch gekennzeichnet, dass** die Auswurfeinheit (132) mit der Steuereinheit (60) derart betreibbar ist, dass die Auswurfeinheit (132) von der zweiten in die erste Position bewegt wird, wenn die Steuereinheit (60) das erste und das zweite Beschleunigungssignal empfängt.

5. Ballenpresse nach Anspruch 2, **dadurch gekennzeichnet, dass** die Ballenpresse (12) einen Zeitgeber (160) umfasst, und die Steuereinheit (60) mit dem Zeitgeber (160) verbunden ist, wobei die Steuereinheit (60) betreibbar ist, mit dem Zeitgeber (160) eine Zeiterfassung für ein vorgegebenes Zeitintervall durchzuführen, wobei die Zeiterfassung beginnt, wenn die Steuereinheit (60) das erste Beschleunigungssignal empfängt, und wobei die Auswurfeinheit (132) mit der Steuereinheit (60) derart ansteuerbar ist, dass die Auswurfeinheit (132) in Abhängigkeit vom vorgegebenen Zeitintervall bewegt wird.

6. Ballenpresse nach Anspruch 5, **dadurch gekennzeichnet, dass** die Auswurfeinheit (132) mit der Steuereinheit (60) derart ansteuerbar ist, dass die Auswurfeinheit (132) von der zweiten in die erste Position bewegt wird, wenn die durch das Zeitintervall vorgegebene Zeit abgelaufen ist.

7. Verfahren zum Betrieb einer Ballenpresse (12) nach mindestens einem der Ansprüche 1 bis 6, wobei die Ballenpresse (12) umfasst, die Aufnahmeeinheit (126), mit der das Erntegut vom Boden (156) aufgenommen und der Presskammer (112) zugeführt wird, die Presskammer (112), mit der das Erntegut zu einem Ballen (200) gepresst wird, die Auswurfeinheit (132), die zwischen der ersten Position, in der die Presskammer (112) geschlossen ist, und der zweiten Position bewegt wird, in der die Presskammer (112) zum Entladen des Ballens geöffnet ist, eine Rampe (154) oder einen Auswerfer, mit der der Ballen (200) abgelegt wird, den Beschleunigungssensor (162), mit dem die Beschleunigung der Ballenpresse (12) in Form des Beschleunigungssignals erfasst wird, **dadurch gekennzeichnet, dass** die Auswurfeinheit (132) in Abhängigkeit vom Beschleunigungssignal bewegt wird.

8. Verfahren nach Anspruch 7, **dadurch gekennzeichnet, dass** der Beschleunigungssensor (162) ein erstes Beschleunigungssignal erzeugt, wenn der Ballen (200) aus der Presskammer (112) ausgeworfen wird und auf die Rampe (154) oder den Auswerfer auftrifft, und/oder ein zweites Beschleunigungssignal erzeugt, wenn der Ballen (200) auf den Boden (156) entladen wird.

9. Verfahren nach Anspruch 8, **dadurch gekennzeichnet, dass** die Auswurfeinheit (132) in Abhängigkeit vom ersten und zweiten Beschleunigungssignal bewegt wird.

10. Verfahren nach Anspruch 9, **dadurch gekennzeichnet, dass** die Auswurfeinheit (132) von der zweiten in die erste Position bewegt wird, wenn das erste und zweite Beschleunigungssignal erzeugt wird.

11. Verfahren nach Anspruch 7, **dadurch gekennzeichnet, dass** eine Zeiterfassung für ein vorgegebenes Zeitintervall durchgeführt wird, wobei die Zeiterfassung beginnt, wenn das erste Beschleunigungssignal erzeugt wird, und die Auswurfeinheit (132) in Abhängigkeit vom vorgegebenen Zeitintervall bewegt wird.

12. Verfahren nach Anspruch 11, **dadurch gekennzeichnet, dass** die Auswurfeinheit (132) von der zweiten in die erste Position bewegt wird, wenn die durch das Zeitintervall vorgegebene Zeit abgelaufen ist.

## Claims

1. Baler, comprising:
a baling chamber (112) for receiving a crop and compressing it into a bale (200), a pick-up unit (126) for picking up the crop from the ground (156) and for feeding the crop into the baling chamber (112), a discharge unit (132), which can be moved between a first position, in which the baling chamber (112) is closed,
and a second position, in which the baling chamber (112) is open for unloading of the bale, a control unit (60),
an acceleration sensor (162) for sensing an acceleration of the baler (12) in the form of an acceleration signal,
wherein the control unit (60) is connected to the acceleration sensor (162), and the acceleration signal can be transmitted from the acceleration sensor (162) to the control unit (60),
**characterized in that** the control unit (60) is configured to move the discharge unit (132) in accordance with the acceleration signal.

2. Baler according to Claim 1, **characterized in that** the baler (12) comprises a ramp (154) or an ejector in order to deposit the bale (200) on the ground (156), and/or the acceleration sensor (162) generates a first acceleration signal when the bale (200) is discharged from the baling chamber (112) and/or hits the ramp (154) or the ejector, and/or a second acceleration signal is generated when the bale (200) is unloaded from the ramp (154) onto the ground (156).

3. Baler according to Claim 2, **characterized in that** the discharge unit (132) can be operated by means of the control unit (60) in such a way that the discharge unit (132) is moved in accordance with the first and/or second acceleration signal.

4. Baler according to Claim 3, **characterized in that** the discharge unit (132) can be operated by means of the control unit (60) in such a way that the discharge unit (132) is moved from the second position into the first position when the control unit (60) receives the first and the second acceleration signal.

5. Baler according to Claim 2, **characterized in that** the baler (12) comprises a timer (160), and the control unit (60) is connected to the timer (160), wherein the control unit (60) can be operated to carry out time recording for a predetermined time interval with the timer (160), wherein time recording begins when the control unit (60) receives the first acceleration signal, and wherein the discharge unit (132) can be driven by means of the control unit (60) in such a way that the discharge unit (132) is moved in accordance with the predetermined time interval.

6. Baler according to Claim 5, **characterized in that** the discharge unit (132) can be driven by means of the control unit (60) in such a way that the discharge unit (132) is moved from the second position into the first position when the time predetermined by the time interval has elapsed.

7. Method for operating a baler (12) according to at least one of Claims 1 to 6, wherein the baler (12) comprises the pick-up unit (126), by means of which the crop is picked up from the ground (156) and fed to the baling chamber (112), the baling chamber (112), by means of which the crop is compressed into a bale (200), the discharge unit (132), which is moved between the first position, in which the baling chamber (112) is closed, and the second position, in which the baling chamber (112) is open for unloading of the bale, a ramp (154) or an ejector, by means of which the bale (200) is deposited, the acceleration sensor (162), by means of which the acceleration of the baler (12) in the form of the acceleration signal is sensed, **characterized in that** the discharge unit (132) is moved in accordance with the acceleration signal.

8. Method according to Claim 7, **characterized in that** the acceleration sensor (162) generates a first acceleration signal when the bale (200) is discharged from the baling chamber (112) and hits the ramp (154) or the ejector, and/or generates a second acceleration signal when the bale (200) is unloaded onto the ground (156).

9. Method according to Claim 8, **characterized in that** the discharge unit (132) is moved in accordance with the first and second acceleration signals.

10. Method according to Claim 9, **characterized in that** the discharge unit (132) is moved from the second position into the first position when the first and second acceleration signals are generated.

11. Method according to Claim 7, **characterized in that** time recording is carried out for a predetermined time interval, wherein time recording begins when the first acceleration signal is generated, and the discharge unit (132) is moved in accordance with the predetermined time interval.

12. Method according to Claim 11, **characterized in that** the discharge unit (132) is moved from the second position into the first position when the time predetermined by the time interval has elapsed.

## Revendications

1. Presse à balles, y compris :
une chambre de pressage (112) destinée à recevoir un produit récolté et à le presser pour former une balle (200), une unité de ramassage (126) destinée à ramasser le produit récolté sur le sol (156) et à l'acheminer dans la chambre de pressage (112), une unité d'éjection (132) mobile entre une première position, dans laquelle la chambre de pressage (112) est fermée, et une deuxième position, dans laquelle la chambre de pressage (112) est ouverte pour décharger la balle, une unité de commande (60), un capteur d'accélération (162) destiné à détecter une accélération de la presse à balles (12) sous la forme d'un signal d'accélération, l'unité de commande (60) étant reliée au capteur d'accélération (162) et le signal d'accélération pouvant être transmis du capteur d'accélération (162) à l'unité de commande (60),
**caractérisée en ce que** l'unité de commande (60) est conçue pour déplacer l'unité d'éjection (132) en fonction du signal d'accélération.

2. Presse à balles selon la revendication 1, **caractérisée en ce que** la presse à balles (12) comprend une rampe (154) ou un éjecteur destiné à déposer la balle (200) sur le sol (156), et/ou **en ce que** le capteur d'accélération (162) génère un premier signal d'accélération lorsque la balle (200) est éjectée de la chambre de pressage (112) et/ou heurte la rampe (154) ou l'éjecteur, et/ou **en ce qu'**un deuxième signal d'accélération est généré lorsque la balle (200) est déchargée de la rampe (154) sur le sol (156).

3. Presse à balles selon la revendication 2, **caractérisée en ce que** l'unité d'éjection (132) peut être actionnée par l'unité de commande (60) de telle sorte que l'unité d'éjection (132) est déplacée en fonction du premier et/ou du deuxième signal d'accélération.

4. Presse à balles selon la revendication 3, **caractérisée en ce que** l'unité d'éjection (132) peut être actionnée par l'unité de commande (60) de telle sorte que l'unité d'éjection (132) est déplacée de la deuxième position vers la première position lorsque l'unité de commande (60) reçoit le premier et le deuxième signal d'accélération.

5. Presse à balles selon la revendication 2, **caractérisée en ce que** la presse à balles (12) comprend une minuterie (160) et **en ce que** l'unité de commande (60) est reliée à la minuterie (160), l'unité de commande (60) étant conçue pour mesurer, à l'aide de la minuterie (160), l'écoulement d'un intervalle de temps prédéfini, cette mesure débutant lorsque l'unité de commande (60) reçoit le premier signal d'accélération, et l'unité d'éjection (132) pouvant être commandée par l'unité de commande (60) de telle sorte que l'unité d'éjection (132) est déplacée en fonction de l'intervalle de temps prédéfini.

6. Presse à balles selon la revendication 5, **caractérisée en ce que** l'unité d'éjection (132) peut être commandée par l'unité de commande (60) de telle sorte que l'unité d'éjection (132) est déplacée de la deuxième position vers la première position lorsque l'intervalle de temps prédéfini est écoulé.

7. Procédé de fonctionnement d'une presse à balles (12) selon au moins l'une des revendications 1 à 6, la presse à balles (12) comprenant l'unité de ramassage (126), au moyen de laquelle le produit récolté est ramassé sur le sol (156) et acheminé vers la chambre de pressage (112), la chambre de pressage (112), au moyen de laquelle le produit récolté est pressé pour former une balle (200), l'unité d'éjection (132), qui est déplacée entre la première position, dans laquelle la chambre de pressage (112) est fermée, et la deuxième position, dans laquelle la chambre de pressage (112) est ouverte pour décharger la balle, une rampe (154) ou un éjecteur au moyen desquels la balle (200) est déposée, le capteur d'accélération (162), au moyen duquel l'accélération de la presse à balles (12) est détectée sous la forme du signal d'accélération, **caractérisé en ce que** l'unité d'éjection (132) est déplacée en fonction du signal d'accélération.

8. Procédé selon la revendication 7, **caractérisé en ce que** le capteur d'accélération (162) génère un premier signal d'accélération lorsque la balle (200) est éjectée de la chambre de pressage (112) et heurte la rampe (154) ou l'éjecteur, et/ou génère un deuxième signal d'accélération lorsque la balle (200) est déchargée sur le sol (156).

9. Procédé selon la revendication 8, **caractérisé en ce que** l'unité d'éjection (132) est déplacée en fonction du premier et du deuxième signal d'accélération.

10. Procédé selon la revendication 9, **caractérisé en ce que** l'unité d'éjection (132) est déplacée de la deuxième position vers la première position lorsque le premier et le deuxième signal d'accélération sont générés.

11. Procédé selon la revendication 7, **caractérisé en ce qu'**une mesure du temps est effectuée pour un intervalle de temps prédéfini, cette mesure débutant lorsque le premier signal d'accélération est généré, et **en ce que** l'unité d'éjection (132) est déplacée en fonction de l'intervalle de temps prédéfini.

12. Procédé selon la revendication 11, **caractérisé en ce que** l'unité d'éjection (132) est déplacée de la deuxième position vers la première position lorsque la durée définie par l'intervalle de temps est écoulée.
